# EUROPEAN PATENT SPECIFICATION

(11) **EP 2 410 692 B1**
(45) Date of publication and mention of the grant of the patent: **08.07.2015**
(21) Application number: 09841748.8
(22) Date of filing: 07.09.2009
(51) Int. Cl.: H04L 12/14, H04L 12/24, H04W 4/24, H04W 24/00

(54) **ASSOCIATED METHOD AND DEVICE FOR CHARGING IDENTIFIERS**
ASSOZIIERTES VERFAHREN UND ASSOZIIERTE EINRICHTUNG FÜR VERGEBÜHRUNGSKENNUNGEN
PROCÉDÉ ET DISPOSITIF ASSOCIÉS POUR IDENTIFIANTS DE FACTURATION

(30) Priority: 20.03.2009 CN 200910129332
(43) Date of publication of application: 25.01.2012
(73) Proprietor: ZTE Corporation, Shenzhen, Guangdong 518057 (CN)
(72) Inventor: ZHOU, Xiaoyun, Guangdong 518057 (CN); ZONG, Zaifeng, Guangdong 518057 (CN)
(74) Representative: Tomlinson, Kerry John
(86) International application number: PCT/CN2009/073797
(87) International publication number: WO 2010/105465

(56) References cited:
- CN-A- 101 141 412
- CN-A- 101 159 563
- CN-A- 101 227 494
- CN-A- 101 286 915
- CN-A- 101 459 951
- HUAWEI: "PDN Connection ID handling in 23.402", 3GPP DRAFT; S2-085642_PDN CONNECTION ID HANDLING IN 23402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia; 20080819, 19 August 2008 (2008-08-19), XP050267666, [retrieved on 2008-08-19]
- ERICSSON: "Multiple PDN connections to one APN with PMIP-based interfaces", 3GPP DRAFT; S2-085579_DP_MPDN_SAME_APN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia; 20080819, 19 August 2008 (2008-08-19), XP050267609, [retrieved on 2008-08-19]
- "3rd Generation Partnership Project; Technical Specification Group Core Network and Terminals; Policy and Charging Control over Gx reference point (Release 8)", 3GPP STANDARD; 3GPP TS 29.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 September 2008 (2008-09-01), pages 1-60, XP050372349,
- "3rd Generation Partnership Project; Technical Specification Group Services and System Aspects; Architecture enhancements for non-3GPP accesses (Release 8)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.2.0, 1 June 2008 (2008-06-01), pages 1-181, XP050363657,
- 'Policy and charging control architecture (Release 8)' 3GPP TS 23.203 V8.1.1 31 March 2008, pages 15 - 53, XP050363022

## Description

### Field of the Invention

The present invention relates to communication field, and in particular to methods and apparatuses for associating charging identifiers.

### Background of the Invention

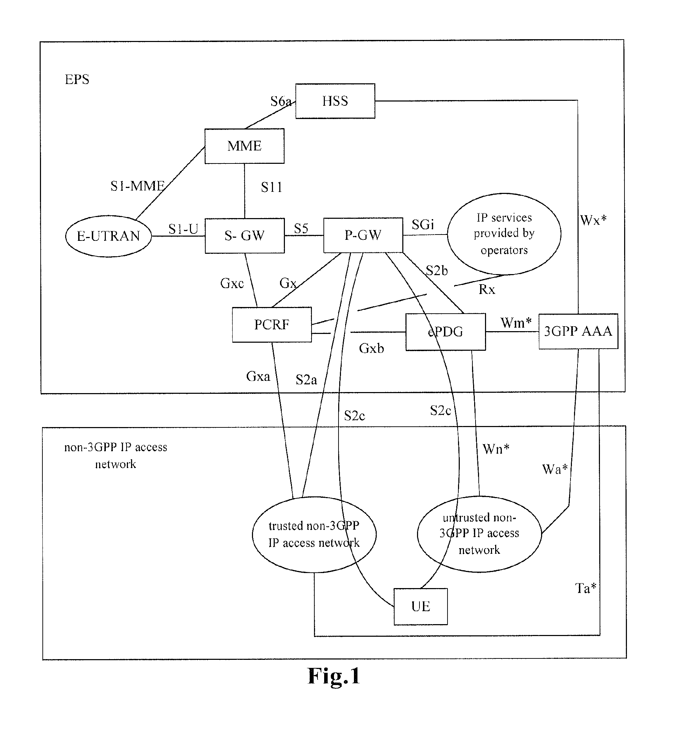

Fig.1 is an architectural diagram of an Evolved Packet System (EPS) of a 3rd Generation Partnership Project (3GPP) network in a non-roaming state according to the related art. As shown in Fig.1. the EPS of the 3GPP comprises: an Evolved Universal Terrestrial Radio Access Network (E-UTRAN), a Mobility Management Entity (MME), a Serving Gateway (S-GW), a Packet Data Network Gateway (P-GW), a Home Subscriber Server (HSS), a 3GPP Authentication, Authorization and Accounting (AAA) server, a Policy and Charging Rules Function (PCRF) entity, and other supporting nodes. In the above, the E-UTRAN connects with the MME through S1-MME; the MME connects with the HSS through S6a; the S-GW is an access gateway device connected with the E-UTRAN, transfers data between the E-UTRAN and the P-GW, and is responsible for performing cache on paging-waiting data; the S-GW connects with the EUTRAN through SI-U, with the MME through S11, with the PCRF through Gxc, and with the P-GW through S5; the P-GW is a border gateway of the EPS and a Packet Data Network (PDN), is responsible for functions such as PDN access and data transmission between the EPS and the PDN; the P-GW connects with the PCRF through Gx, with an Evolved Packet Data Gateway (ePDG) through S2b, and with IP services provided by an operator through SGi; the PCRF connects with an Internet Protocol (IP) service network interface of the operator through Rx interface to acquire service information, connects with gateway devices in the 3GPP network through Gx/Gxa/Gxb/Gxc interfaces, and is responsible for initiating establishment of IP bearer, ensuring Quality of Service (QoS) of service data and conducting charging control; and the 3GPP AAA connects with the HSS through Wx*, with an untrusted non-3GPP IP access network through Wa* and with a trusted non-3GPP IP access network through Ta*.

The EPS supports intercommunication with a non-3GPP network, which is achieved through S2a/b/c interfaces; and the P-GW serves as an anchor point between the 3GPP network and the non-3GPP network. The non-3GPP network comprises the trusted non-3GPP network and the untrusted non-3GPP network. The IP access of the trusted non-3GPP network can interface with the P-GW directly through the S2a; the IP access of the untrusted non-3GPP network needs to connect with the P-GW via the ePDG, wherein the interface between the ePDG and the P-GW is the S2b, and the interface between the ePDG and the untrusted non-3GPP IP access network is Wn*. Meanwhile, a user equipment (UE) can connect directly with the P-GW through the S2c interface by using a Dual Stack Mobile Internet Protocol Version 6 (DSMIPv6) protocol. The DSMIPv6 protocol is an extension of MIPv6 (MoblieIPv6, Mobile Internet Protocol Version 6); and by this protocol, the UE can bind an acquired Internet Protocol Version 4 (IPv4)/ Internet Protocol Version 6 (IPv6) Care-of Address and an IPv4/IPv6 Home of Address. Thus service continuity can still be ensured even if the UE moves into an IPv4 network.

In the EPS system, a Policy and Charging Enforcement Function (PCEF) resides in the P-GW, and the PCRF exchanges information with the P-GW through the Gx interface. When the interface between the P-GW and the S-GW is based on the PMIPv6, the S-GW also has a policy control function, which is called as Bearer Binding and Event Reporting Function (BBERF) entity, and the S-GW exchanges information with the PCRF through the Gxc interface. When the User Equipment (UE) performs accessing through the trusted non-3GPP network, a BBERF also exists in the trusted non-3GPP network; and an access gateway of the trusted non-3GPP network exchanges information with the PCRF through the Gxa interface. When the UE performs accessing through the untrusted non-3GPP network, a BBERF exists in the ePDG; and the ePDG exchanges information with the PCRF through the Gxb interface. Meanwhile, an Application Function (AF) which provides services for the UE transmits, through the Rx interface, service information for establishing Policy and Charging Control (PCC) or QoS policies to the PCRF.

The EPS supports both off-line charging and on-line charging. For the off-line charging, when the UE performs accessing through the 3GPP, both the S-GW and the P-GW collect charging information; and if a chargeable event occurs, both the S-GW and the P-GW generate bills and transmit them to a charging system, wherein, the bills generated by the S-GW and the P-GW contain an identical charging identifier (Charging ID) in order that the charging system associates the charging information for the UE collected by the S-GW and the P-GW during this charging period. In the prior art, the charging identifier is generally generated by the P-GW, and is transmitted to the S-GW through a message related to a General Packet Radio Service Tunnelling Protocol (GTP) and the PMIPv6 protocol. Similarly, when the UE performs accessing through the non-3GPP and by use of the PMIPv6, the bills are generated by the trusted non-3GPP access gateway (or ePDG) and the P-GW. The Charging identifier is generated by the P-GW and transmitted to the trusted non-3GPP access gateway (or ePDA) through a Proxy Binding Acknowledge (PBA) message of the PMIPv6 protocol. When the UE performs accessing through the non-3GPP and uses the DSMIPv6 protocol, the charging identifier will be transmitted from the P-GW via the PCRF to the trusted non-3GPP access gateway (or ePDG) through signals related to the PCC because there is no direct interface between the P-GW and the trusted non-3GPP access gateway (or ePDG). However, if the UE has multiple PDN access, when a charging identifier is transmitted by PCC, a problem may occur that the trusted non-3GPP (or ePDG) can not associate the charging identifier with a correct PDN connection. The existing problems will be described in detail hereinafter.

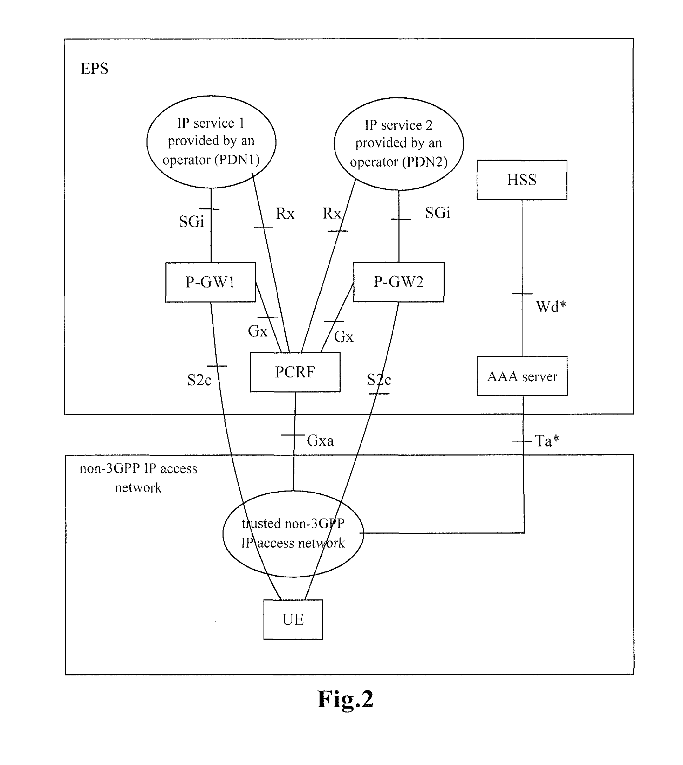

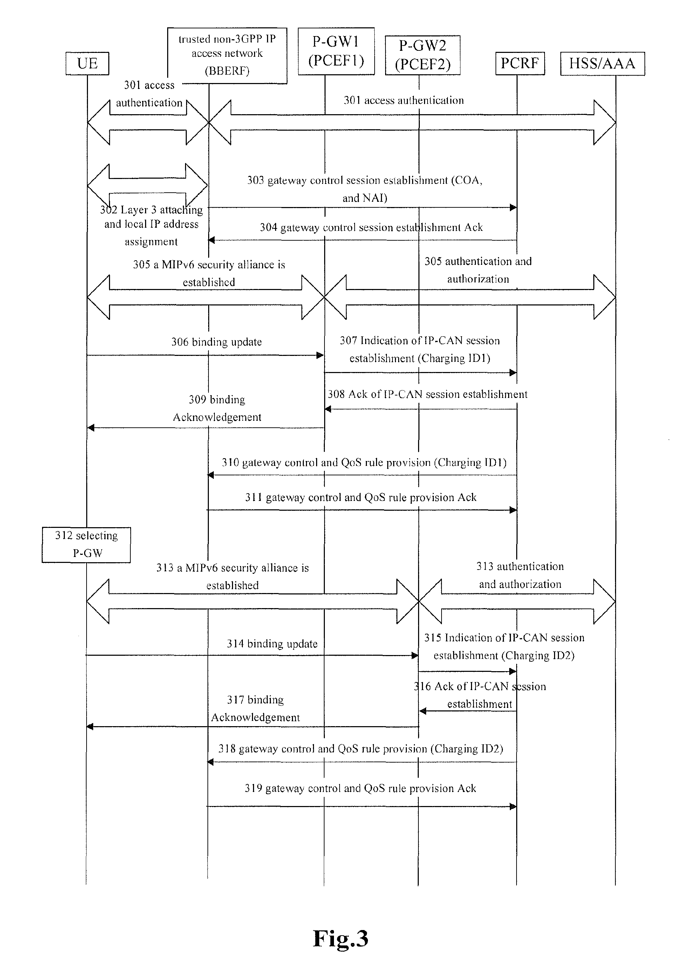

Multiple PDN access means that a UE can access multiple PDNs simultaneously through multiple P-GWs or one P-GW. Fig.2 is a schematic diagram in which a UE simultaneously accesses two PDNs through two P-GWs and uses the DSMIPv6 protocol according to the related art. Fig.3 is a flowchart of UE initial attaching in the scene shown in Fig.2; and the flow comprises the following Step 301 to Step 309.
Step 301: A UE accesses a trusted non-3GPP access network through Layer 2; and an HSS/AAA authorizes access authentication of the UE.
Step 302: After the authentication is successful, a Layer 3 connection is established between the UE and the trusted non-3GPP access system; and the access system assigns an IP address for the UE as Care-of Address (CoA) of the UE.
Step 303: A BBERF residing in the trusted non-3GPP access gateway transmits, to a PCRF, a "gateway control session establishment" request message which carries a Network Access Identifier (NAI) and the CoA of the UE.
Step 304: After receiving the request message sent by the BBERF, the PCRF establishes a control policy, namely QoS rule, based on network policies and subscription information of the UE, and transmits it to the trusted non-3GPP access network through a "gateway control session establishment Acknowledgement (Ack)" message. Now the control policy is independent of services to be accessed by the UE.
Step 305: The UE conducts a Domain Name Server (DNS) query according to Access Point Name (APN) 1, so as to obtain an IP address of P-GW1 which provides access to service network 1, and then a security alliance is established between the UE and the P-GW1, during which the P-GW1 assigns a Home of Address (HoA) 1 for the UE.
Step 306: After receiving the HoA1, the UE transmits, to the P-GW1, a "binding update" request message which carries the CoA and the HoA1.
Step 307: After receiving the "binding update" request message sent by the UE, the P-GW1 generates a charging identifier (Charging ID) 1 for identifying a charging bill related to PDN Connection 1 of APN1, A PCEF residing in the P-GW1 transmits, to the PCRF, an "Indication of IP Connectivity Access Network (IP-CAN) session establishment" message which carries the CoA, the HoA1, the NAI and the APN1; and the PCRF associates this session with a gateway control session according to the CoA. The message also carries the Charging ID1 which will be transmitted to the trusted non-3GPP access gateway through the PCRF.
Step 308: The PCRF establishes a corresponding PCC rule and an event trigger according to the network policies, the user subscription and the information of the service network 1 to be accessed etc., and transmits them to the P-GW1 through an "Ack of IP-CAN session establishment" message.
Step 309: After receiving the "Ack of IP-CAN session establishment" message, the P-GW1 returns a "binding Acknowledgement" message to the UE.
Step 310: The PCRF associates the gateway control session established in the Step 303 with the IP-CAN session established in the Step 307 according to the NAI and the CoA, modifies a previous QoS rule and establishes the event trigger on the basis of the network policies, the user subscription and the information of service network 1 to be accessed etc., and transmits them to the BBERF in the trusted non-3GPP access gateway through a "gateway control and QoS rule provision" message. The Charging ID 1 is also carried in the message.
Step 311: After receiving the "gateway control and QoS rule provision" message, the BBERF in the trusted non-3GPP access gateway updates the QoS rule etc.; meanwhile, the trusted non-3GPP access gateway stores the Charging ID1, which will be used to identify a charging bill related to the PDN Connection 1 of the APN 1. The BBERF returns a "gateway control and QoS rule provision Ack" message to the PCRF.
   When the UE determines to access service network 2 at any time after having accessed the service network 1, the following Step 312 to Step 319 are executed.
Step 312: When the UE determines to access the service network 2, a DNS query is performed according to APN2 and the IP address of P-GW2 which provides the access to service network 2 is obtained.
Step 313: After obtaining the IP address of the P-GW2 which provides the access to service network 2, the UE establishes a security alliance with the P-GW2, during which the P-GW2 assigns a Home of Address (HoA) 2 for the UE.
Step 314: After obtaining the HoA2, the UE transmits, to the P-GW2, a "binding update" request message which carries the CoA and the HoA2.
Step 315: After receiving the "binding update" request message, the P-GW2 generates a Charging ID2 for identifying a charging bill related to PDN Connection 2 of the APN2. A PCEF residing in the P-GW2 transmits, to the PCRF, an "Indication of IP-CAN session establishment" message which carries the CoA, the HoA2, the NAI and the APN2 as well as the Charging ID2.
Step 316: After receiving the "Indication of IP-CAN session establishment" message, the PCRF establishes a corresponding PCC rule and an event trigger according to the network policies, the user subscription and the information of the service network 2 to be accessed etc., and transmits them to the P-GW2 through an "Ack of IP-CAN session establishment" message.
Step 317: After receiving the "Ack of IP-CAN session establishment" message, the P-GW2 returns a "binding Acknowledgement" message to the UE.
Step 318: The PCRF associates, according to the CoA and the NAI, the gateway control session established in the Step 303 with the IP-CAN session established in the Step 316. The PCRF establishes a QoS rule and an event trigger on the basis of the network policies, the user subscription and the information of the service network 2 to be accessed etc., and transmits them to the BBERF of the trusted non-3GPP access gateway through a "gateway control and QoS rule provision" message. Meanwhile, the Charging ID2 is carried in this message.
Step 319: After receiving the "gateway control and QoS rule provision" message, the BBERF of the trusted non-3GPP access gateway installs the QoS rule and the event trigger. Meanwhile, the trusted non-3GPP access gateway stores the Charging ID2, which is used to identify the charging bills related to the PDN Connection 2 of the APN2. The BBERF returns a "gateway control and QoS rule provision Ack" message to the PCRF.

By way of the above process, the UE respectively establishes IP connections with the service network 1 and the service network 2. Such an IP connection from the UE to the service network is called as IP-CAN session. For convenience of description, hereinafter, the IP connection from the UE to the service network 1 will be called as IP-CAN session 1 and the IP connection from the UE to the service network 2 will be called as IP-CAN session 2. A Diameter session is established between the PCRF and the trusted non-3GPP access network (in the prior art, a Diameter protocol is used to establish this connection, and context of a Diameter session is stored in the BBERF of the trusted non-3GPP access gateway and the PCRF). The P-GW1 and the P-GW2 respectively establishes a Diameter session with the PCRF.

The P-GW1 and the P-GW2 respectively generate, for the PDN Connection 1 and the PDN Connection 2, the Charging ID1 and the Charging ID2 which are used for identifying charging information, and transmit them to the trusted non-3GPP access gateway via the PCRF. The current problem is that Diameter sessions between the P-GW and the PCRF and the PDN connections are one-to-one; however, Diameter sessions between the trusted non-3GPP access network and the PCRF and the PDN connections are one-to-many. Therefore, when the PCRF transmits a charging identifier to the trusted non-3GPP access gateway through the Diameter session, the trusted non-3GPP access gateway can not determine which PDN connection is associated with the charging identifier. Moreover, when the P-GW1 and the P-GW2 update the charging identifier in certain situations (for example, Charging ID3 replaces the Charging ID1, and Charging ID4 replaces the Charging ID2), the PCRF transmits these two charging identifiers to the trusted non-3GPP access gateway; and the trusted non-3GPP access gateway can not associate them with PDN connections correctly. This will result in that the charging information reported to the charging system is wrong. For example, the charging bills for the PDN Connection 1 generated by the trusted non-3GPP access gateway are identified by the Charging ID2, while the Charging ID1 is used to identify the charging bills of the PDN Connection 2.

Similarly, the above mentioned problem also exists in this situation: when the UE uses the DSMIPv6 protocol multiple PDN access through the untrusted non-3GPP access system, how the ePDG associates a charging identifier with a correct PDN connection.

With regard to problems in the related art that charging errors are caused by the ePDG incapable of associating the charging identifier with the correct PDN connection when the UE uses the DSMIPv6 protocol and multiple PDN connections exists, no effective solutions have been proposed till now.

A 3GPP document titled "3rd Generation Partnership Project; Technical Specification Group Core Network and Terminals; Policy and Charging Control over Gx reference point (Release 8)" has some contents about the above problems, especially in chapter 4, pages 8-22, chapter 4a, pages 23-27 and chapter 5a, pages 50-55.

### Summary of the Invention

The present invention is proposed for the problem in the related art that charging errors are caused by a trusted non-3GPP access gateway or an ePDG incapable of associating a charging identifier with a correct PDN connection when a UE uses a DSMIPv6 protocol and multiple PDN connections exist; therefore, the main purpose of the present invention is to provide an improved solution for associating charging identifiers to resolve the above mentioned problem.

In order to achieve the above object, a PCRF is provided according to one aspect of the present invention.

The PCRF according to the present invention comprises: a first transmitting module, configured to transmit a Quality of Service, QoS, rule to a Bearer Binding and Event Reporting Function (BBERF); and characterized by a second transmitting module, configured to transmit a charging identifier associated with the QoS rule to the BBERF; and a scheduler module, configured to schedule the second transmitting module when the first transmitting module transmits the QoS rule.

Preferably, the above PCRF also comprises: an acquiring module, configured to acquire the charging identifier.

In order to achieve the above object, a BBERF is provided according to another aspect of the present invention.

The BBERF according to the present invention comprises: a receiving module, configured to receive a Quality of Service, QoS, rule and characterized by the receiving module being further configured to receive a charging identifier associated with the QoS rule from a Policy and Charging Rule Function, PCRF; and by an associating module, configured to associate the charging identifier with a Packet Data Network, PDN, connection according to the charging identifier and the QoS rule received by the receiving module.

In order to achieve the above object, a method for associating charging identifiers is provided according to a still another aspect of the present invention.

The method for associating charging identifiers according to the present invention comprises: when a Policy and Charging Rule Function, PCRF, transmits a Quality of Service, QoS, rule to a Bearer Binding and Event Reporting Function, BBERF, the PCRF transmits a charging identifier associated with the QoS rule to the BBERF.

Preferably, before the PCRF transmits the charging identifier to the BBERF, the method also comprises one of the followings: the PCRF acquiring the charging identifier from a Packet Data Network (PDN) gateway; and the PCRF acquiring the charging identifier from an Indication of Internet Protocol Connectivity Access Network (IP-CAN) session establishment message or an Indication of IP-CAN session modification message received from the PDN gateway.

Preferably, the BBERF resides in one of the following entities: a trusted non-3GPP access gateway or an evolved packet data gateway.

According to the present invention, the method that the PCRF transmits a charging identifier to the BBERF and meanwhile transmits the PDN connection identifier associated with the charging identifier to the BBERF is used to solve the problem that in the related art, charging errors are caused by the trusted non-3GPP access gateway or ePDG which is incapable of associating the charging identifier with correct PDN connections when the UE uses the DSMIPv6 protocol and has multiple PDN connections, and thus the accuracy of charging is improved.

### Brief Description of the Drawings

Drawings, provided for further understanding of the present invention and forming a part of the specification, are used to explain the present invention together with embodiments of the present invention rather than to limit the present invention, wherein
Fig.1 is an architectural diagram of an EPS of a 3GPP network in a non-roaming state according to the related art;
Fig.2 is a schematic diagram in which a UE accesses different service networks through different P-GWs according to the related art;
Fig.3 is a flowchart of attaching, in which a UE accesses different service networks through different P-GWs according to the related art;
Fig.4 is a flowchart of associating charging identifiers, in which a UE accesses different service networks through different P-GWs according to the embodiments of the present invention;
Fig.5 is a flowchart of an embodiment of updating charging identifiers after a UE has established IP connections with both service network 1 and service network 2 according to the embodiments of the present invention;
Fig.6 is a flowchart of associating charging identifiers, in which a UE accessing different service networks through an untrusted non-3GPP access network according to the embodiments of the present invention;
Fig.7 is a structure diagram of a PCRF according to the embodiments of the present invention; and
Fig.8 is a structure diagram of a BBERF according to the embodiments of the present invention.

### Detailed Description

### Function Overview

Considering a problem in the related art that charging errors are caused by a trusted non-3GPP access gateway or an ePDG incapable of associating a charging identifier with a correct PDN connection when a UE uses a DSMIPv6 protocol and multiple PDN connections exist, the embodiments of the present invention provide an improved solution for associating charging identifiers, in which a PCRF transmits a charging identifier to a BBERF and meanwhile transmits a PDN connection identifier associated with the charging identifier to the BBERF, so that the BBERF associates the charging identifier with a PDN connection according to the received PDN connection identifier, and thus the accuracy of charging is improved. The above association means that the trusted non-3GPP access gateway or the ePDG learns which charging identifier should be used to identify charging bills for a certain PDN connection.

It needs to be noted that the embodiments of the present application and the characteristics of the embodiments can be combined with each other if there are no conflicts. The present invention will be illustrated in detail with reference to the drawings and in conjunction with the embodiments hereinafter.

### Method Embodiments

A method for associating charging identifiers is provided according to the embodiments of the present invention, and this method can be applied to a situation that a user equipment has multiple PDN connections and a DSMIPv6 protocol is used.

The method comprises that: when a PCRF transmits a charging identifier to a BBERF, the PCRF transmits a PDN connection identifier associated with the charging identifier to the BBERF, that is to say, the PCRF transmits the PDN connection identifier associated with the charging identifier to the BBERF, the PCRF can transmit a gateway control and QoS rule provision message to the BBERF, wherein the gateway control and QoS rule provision message carries the charging identifier and the PDN connection identifier.

Then the BBERF receives the charging identifier and the PDN connection identifier, and associates the charging identifier with a PDN connection according to the PDN connection identifier.

Preferably, the PDN connection identifier can comprise one or any combination of the following identifiers that can uniquely distinguish a PDN connection from others: Home of Address (HoA) of a UE, Access Point Name (APN), Quality of Service rule. For example, when the PCRF transmits, to the BBERF, the QoS rule (wherein an identifier capable of uniquely distinguishing a PDN connection from others is carried), the PCRF transmits a charging identifier associated with the QoS rule to the BBERF.

Prior to this, the PCRF needs to acquire the charging identifier, which can be realized by one of the following manners.
(1) When a PDN connection is established, the PCRF acquires the charging identifier from a PDN gateway.
(2) The PCRF acquires the charging identifier from an Indication of IP-CAN session establishment message or an IP-CAN session modification indication message received from the PDN gateway.

In the above, the BBERF resides in one of the following entities: a trusted non-3GPP access gateway and an ePDG. That is to say, the trusted non-3GPP acceoss gateway or the ePDG can associate the charging identifier with the PDN connection according to the PDN connection identifier.

A method for associating charging identifiers is also provided according to the embodiments of the present invention, and the method comprises that: when a PCRF transmits a QoS rule to a BBERF, the PCRF transmits a charging identifier associated with the QoS rule to the BBERF.

In the above, before the PCRF transmits the charging identifier to the BBERF, the method also comprises one of the followings: the PCRF acquiring the charging identifier from a packet data network gateway; and the PCRF acquiring the charging identifier from an Indication of Internet Protocol Connection Access Network session establishment message or an Indication of Internet Protocol Connection Access Network session modification message received from a packet data network gateway.

In the above, the BBERF resides in one of the following entities: a trusted non-3GPP access gateway or an evolved packet data gateway.

By way of the embodiment, the problem in the related art that charging errors are caused by a trusted non-3GPP access gateway or an ePDG incapable of associating a charging identifier with a correct PDN connection when a UE uses a DSMIPv6 protocol and has multiple PDN connections is solved by using the method that the PCRF transmits a PDN connection identifier associated with a charging identifier to the BBERF when transmitting the charging identifier to the BBERF, and thus the accuracy of charging is improved.

The realization process of the embodiments of the present invention will be described in detail in conjunction of examples hereinafter. It should be noted that the following embodiments are all based on the scene shown in Fig.2, where a UE accesses different service networks through different P-GWs.

### Embodiment 1

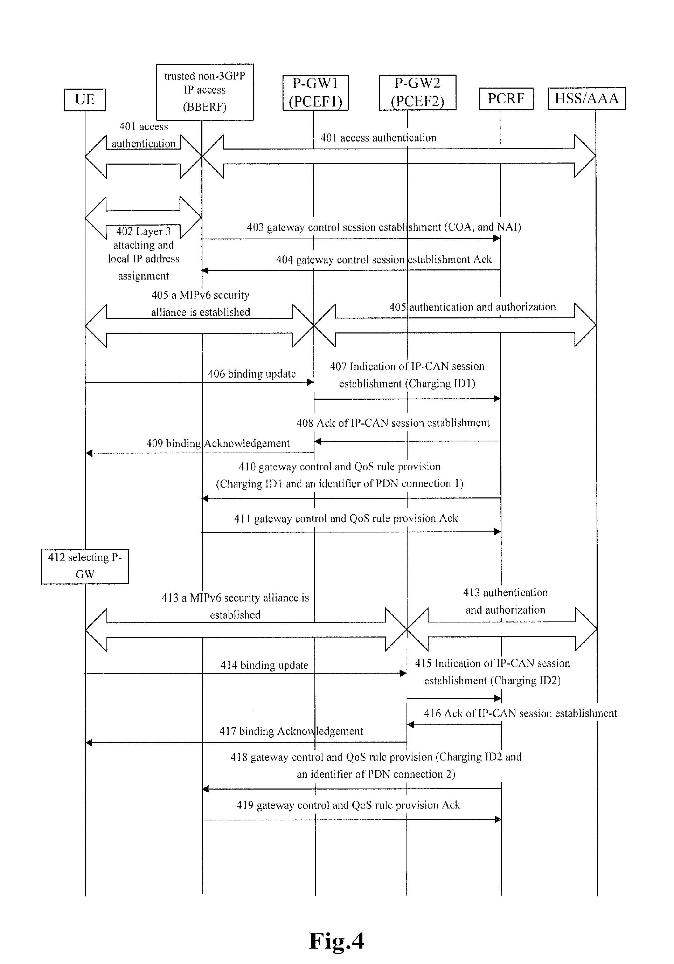

Fig.4 is a flowchart of a UE accessing different service networks through different P-GWs to establish PDN connections and to associate charging identifiers according to the embodiments of the present invention. As shown in Fig.4, the flow comprises Step 401 to Step 419.
Step 401: A user equipment (UE) accesses a trusted non-3GPP access network through Layer 2; and an HSS/AAA authorizes UE access authentication.
Step 402: A Layer 3 connection is established between the UE and the trusted non-3GPP access system after the authentication is successful; and the access system assigns an IP address for the UE as its CoA.
Step 403: After the access system assigns the IP address for the UE, a BBERF residing in a trusted non-3GPP access gateway transmits a "gateway control session establishment" request message to the PCRF, and the "gateway control session establishment" request message carries an NAI and the CoA which are the identifiers of the UE.
Step 404: After receiving the "gateway control session establishment" request message, the PCRF establishes a control policy, i.e., a QoS rule, on the basis of network policies and subscription information of the UE, and then transmits it to the trusted non-3GPP access network through a "gateway control session establishment Ack" message, wherein the control policy is independent of services to be accessed by the UE.
Step 405: The UE performs a DNS query according to APN1 and acquires an IP address of the P-GW1 which provides an access to service 1 network. A security alliance is established between the UE and the P-GW1, during which the P-GW1 assigns a Home of Address HoA1 for the UE.
Step 406: After the P-GW1 assigns the Home of Address HoA1 for the UE, the UE transmits a "binding update" request message to the P-GW1, and the "binding update" request message carries the CoA and the HoA1.
Step 407: After receiving the "binding update" request message, the P-GW1 generates a charging identifier Charging ID1 wherein the Charging ID1 is used to identify charging bills related to PDN connection1 of the APN1. The PCEF1 residing in the P-GW1 transmits an "Indication of IP-CAN session establishment" message to the PCRF, and the "Indication of IP-CAN session establishment" message carries the CoA, the HoA1, the NAI, and the APN1. The PCRF associates the session with a gateway control session according to the CoA. The "Indication of IP-CAN session establishment" message can also carry the Charging ID1 so as to transmit it to the trusted non-3GPP access gateway via the PCRF.
Step 408: The PCRF establishes a corresponding PCC rule and an event trigger according to the network policies, the user subscription and information of service network 1 to be accessed etc., and transmits them to the PCEF1 by an "Ack of IP-CAN session establishment" message.
Step 409: After the PCEF1 receives the "Ack of IP-CAN session establishment" message, the P-GW1 returns a "binding Acknowledgement" message to the UE.
Step 410: The PCRF associates the gateway control session established in the Step 403 with the IP-CAN session established in the Step 407 according to the NAI and the CoA, modifies a previous QoS rule on the basis of the network policies, the user subscription, and the information of the service network1 to be accessed etc., establishes an event trigger, and transmits it to the BBERF in the trusted Non-3GPP access gateway by a "gateway control and QoS rule provision" message, wherein the "gateway control and QoS rule provision" message carries the Charging ID1 and an identifier of PDN connection 1.
Step 411: The BBERF in the trusted non-3GPP access gateway updates the QoS rule, etc. Meanwhile, the trusted non-3GPP access gateway stores the Charging ID1, and associates the Charging ID1 with charging bills related to PDN Connection 1 according to the identifier of the PDN Connection 1; and the BBERF returns a "gateway control and QoS rule provision Ack" message to the PCRF.
Step 412: When the UE determines to access service network 2, the UE performs a DNS query according to APN2, and acquires an IP address of the P-GW2 which provides access to service network 2.
Step 413: After the UE acquires the IP address of the P-GW2 of the access service network 2, a security alliance is established between the UE and the P-GW2, during which the P-GW2 assigns a Home of Address HoA2 for the UE.
Step 414: After the P-GW2 assigns the Home of Address HoA2 for the UE, the UE transmits a "binding update" request message to the P-GW2, and the "binding update" request message carries the CoA and the HoA2.
Step 415: The P-GW2 generates Charging ID2 to identify charging bills related to PDN Connection 2 of APN2. PCEF2 residing in the P-GW2 transmits, to the PCRF, an "Indication of IP-CAN session establishment" message, which carries the CoA, the HoA2, the NAI, and the APN2, as well as the Charging ID2.
Step 416: After receiving the "Indication of IP-CAN session establishment" message, the PCRF establishes a corresponding PCC rule and an event trigger according to the network policies, the user subscription and information of the service network 2 to be accessed etc., and transmits them to the PCEF2 by an "Ack of IP-CAN session establishment" message.
Step 417: After the PCEF2 receives the "Ack of IP-CAN session establishment" message, the P-GW2 returns a "binding Acknowledgement" message to the UE.
Step 418: The PCRF associates the gateway control session established in the Step 403 with the IP-CAN session established in the Step 416 according to the NAI and the CoA. The PCRF establishes a QoS rule and an event trigger on the basis of the user subscription and information of the service network 2 to be accessed etc., and transmits them to the BBERF in the trusted non-3GPP access gateway by a "gateway control and QoS rule provision" message. Meanwhile, the "gateway control and QoS rule provision" message carries the Charging ID2 and an identifier of the PDN connection 2.
Step 419: After receiving the "gateway control and QoS rule provision" message, the BBERF in the trusted non-3GPP access gateway installs the QoS rule and the event trigger. Meanwhile the trusted non-3GPP access gateway stores the Charging ID2 which can be used to identify charging bills related to the PDN Connection 2 of the APN2. The BBERF returns a "gateway control and QoS rule provision Ack" message to the PCRF.

In the above embodiment, the PDN connection identifiers can be assigned by the PCRF and used as unique identifiers for respective PDN connections of the UE. The PDN connection identifier can also be indicated by the APN or the HoA of the PDN connection of the UE. For example, in the "gateway control and QoS rule provision" message in the Step 410, the APN1 or the Home of Address HoA1 of the PDN Connection 1 of the UE is carried to indicate the PDN Connection 1 identifier, which is used to notify the trusted non-3GPP access gateway to associate the Charging ID1 with the PDN Connection 1. Similarly, during the process that the UE accesses the service network 2, the PCRF can use the Access Point Name APN2 or the Home of Address HoA2 of the UE to notify the trusted non-3GPP access gateway to associate the Charging ID2 with the PDN Connection 2.

If the charging identifier of a certain PDN connection and its QoS rule are sent at the same time, the QoS rule can also be used to identify the charging identifier of this PDN connection (the QoS rule includes the HoA).

It should be noted that the embodiment of the present invention does not limit the specific realization methods of the PDN connection identifiers only if a PDN connection of the UE can be uniquely distinguished.

By way of the above embodiment, the trusted non-3GPP access gateway obtains associated relationship between a charging identifier and a PDN connection. Therefore, when a chargeable event occurs, the trusted non-3GPP access gateway uses a charging identifier associated with a PDN connection to identify a charging bill when the trusted non-3GPP access gateway transmits the charging bill of the PDN connection to the charging system.

### Embodiment 2

The embodiment describes a flowchart of associating charging identifiers when a UE switches from a 3GPP access to a non-3GPP access or from a non-3GPP access to another non-3GPP access, wherein the UE uses the DSMIPv6 protocol when it accesses a target network.

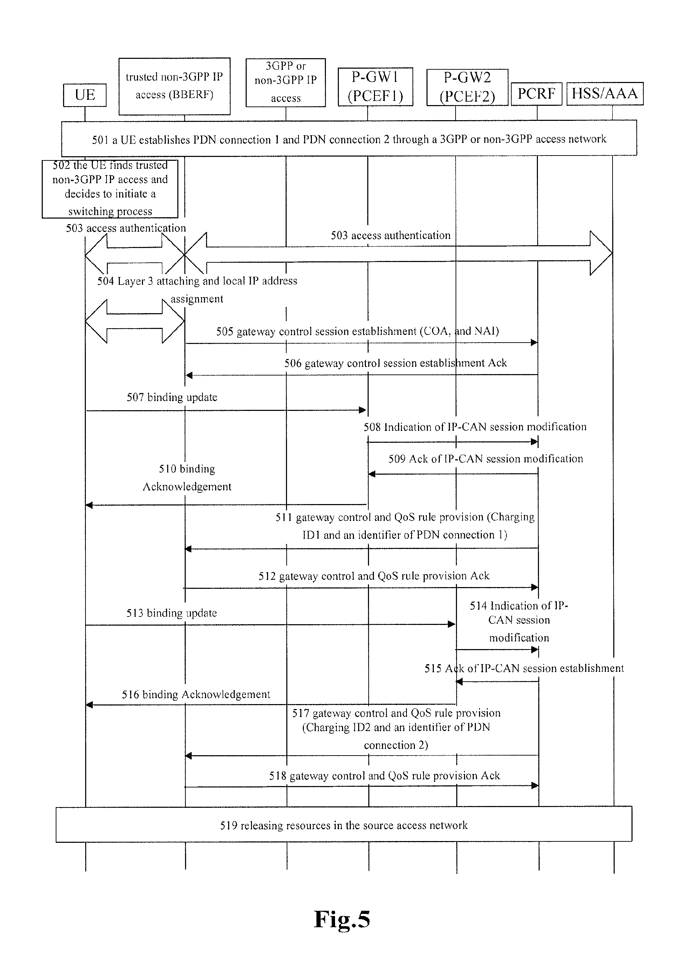

Fig.5 is a flowchart of an embodiment of updating charging identifier(s) after the UE establishes IP connections with service network 1 and service network 2 according to the embodiment of the present invention. As shown in Fig.5, the flow comprises the following Step 501 to Step 519.
Step 501: The UE establishes PDN connections to PDN1 and PDN2 via a 3GPP access or a non-3GPP access, wherein the P-GW1 establishes PDN Connection 1 and assigns IP address 1 and charging identifier Charging ID1 for the UE. The IP Address 1 will be HoA1 used when the UE accesses through the DSMIPv6 protocol. The P-GW2 establishes PDN Connection 2 and assigns IP address 2 and charging identifier Charging ID2 for the UE. The IP Address will be HoA2 used when the UE accesses through the DSMIPv6 protocol.
Step 502: The UE finds a new trusted non-3GPP access network and decides to initiate a handover process.
Step 503: The UE executes access authentication and authorization in the target non-3GPP access system.
Step 504: The UE executes Layer 3 attaching and obtains a local IP address as Care-of Address (CoA), i.e., local IP address assignment.
Step 505: A BBERF residing in a trusted non-3GPP access gateway transmits, to the PCRF, a "gateway control session establishment" request message which carries NAI and the CoA.
Step 506: After receiving the "gateway control session establishment" request message, the PCRF associates the gateway control session with two IP-CAN sessions established in a source system according to the NAI. The PCRF returns a "gateway control session establishment Ack" message to the BBERF.
   It should be noted that the UE has already executed the bootstrapping process of the DSMIPV6 when the UE was in the source system. The UE established security alliances respectively with the P-GW1 and the P-GW2, and obtained HoA1 and HoA2 during the process.
Step 507: The UE transmits, to the P-GW1, a "binding update" request message which carries the CoA and the HoA1.
Step 508: After the P-GW receives the "binding update" request message sent from the UE, a PCEF1 residing in the P-GW1 transmits, to the PCRF, an "Indication of IP-CAN session modification" message, which carries the CoA, the HoA1, the NAI and an APN1. The message also carries Charging ID1 so as to transmit it to the trusted non-3GPP access gateway via the PCRF. The Charging ID1 is a charging identifier that the P-GW1 assigned for the PDN Connection 1 established by the UE in the source system.
Step 509: After receiving the "Indication of IP-CAN session modification" message, the PCRF establishes a corresponding PCC rule and an event trigger based on network policies, user subscription and information of service network 1 to be accessed etc., and transmits them to the PCEF1 by an "Ack of IP-CAN session modification" message in order that the PCEF1 performs updating.
Step 510: After the PCEF1 receives the "Ack of IP-CAN session modification" message, the P-GW1 returns a "binding Acknowledgement" message to the UE.
Step 511: The PCRF establishes a new QoS rule and an event trigger on the basis of the network policies, the user subscription and the information of the service network 1 to be accessed etc., and transmits them to the BBERF in the target trusted non-3GPP access gateway by a "gateway control and QoS rule provision" message which also carries the Charging ID1 and a PDN Connection 1 identifier.
Step 512: After receiving the "gateway control and QoS rule provision" message, the BBERF in the trusted non-3GPP access gateway updates the QoS rule etc. Meanwhile, the trusted non-3GPP access gateway stores the Charging ID1, and associates the Charging ID1 with a charging bill related to PDN Connection 1 according to the PDN Connection 1 identifier. The BBERF returns a "gateway control and QoS rule provision Ack" message to the PCRF.
Step 513: The UE transmits, to the P-GW2, a "binding update" message which carries the CoA and HoA2.
Step 514: After receiving the "binding update" message sent from the UE, PCEF2 residing in the P-GW2 transmits, to the PCRF, an "Indication of IP-CAN session modification" message which carries the CoA, the HoA2, the NAI and the APN2. The message also carries Charging ID2 which is an identifier that the P-GW2 assigned for PDN connection 2 established by the UE in the source system.
Step 515: The PCRF establishes a corresponding PCC rule and an event trigger according to the network policies, the user subscription and information of the service network 2 to be accessed etc., and transmits them to the PCEF2 through an "Ack of IP-CAN session establishment" message.
Step 516: After the PCEF2 receives the "Ack of IP-CAN session establishment" message, the P-GW2 returns a "binding Acknowledgement" message to the UE.
Step 517: The PCRF reestablishes a QoS rule and an event trigger on the basis of the network policies, the user subscription and the information of the service network 2 to be accessed etc., and transmits them to the BBERF in the trusted non-3GPP access gateway by a "gateway control and QoS rule provision" message. Meanwhile, the "gateway control and QoS rule provision" message carries the Charging ID2 and an identifier of PDN Connection 2.
Step 518: After receiving the "gateway control and QoS rule provision" message, the BBERF in the trusted non-3GPP access gateway installs the QoS rule and the event trigger. Meanwhile, the trusted non-3GPP access gateway stores the Charging ID2 which will be used to identify a charging bill related to the PDN Connection 2 of the APN2. The BBERF returns a "gateway control and QoS rule provision Ack" message to the PCRF.
Step 519: Reserved resources in the source access network are released.

The trusted non-3GPP access gateway associates the charging identifier with a PDN connection through the above process. During the handover process, no change occurs to the charging identifier. Therefore, the charging identifier does not need to be carried in the Step 508 and the Step 514.

In other embodiments, when receiving the message in the Step 505, the PCRF can send all charging identifiers related to the UE to the trusted non-3GPP access gateway and associate the charging identifiers with the PDN connection identifiers.

The PDN connection identifiers can be assigned by the PCRF and uniquely identify respective PDN connections of the UE. The PDN connection identifier can also be indicated by the APN or the HoA of the PDN connection of the UE.

If a charging identifier of a certain PDN connection and a QoS rule of the PDN connection are sent at the same time, the QoS rule can also be used to identify the charging identifier of the PDN connection.

By way of the above embodiment, after the UE executes handover, the trusted non-3GPP access gateway of the target system obtains associated relationship between a charging identifier and a PDN connection. If a chargeable event occurs, the trusted non-3GPP access gateway uses a charging identifier associated with a PDN connection to identify a charging bill when the trusted non-3GPP access gateway transmits the charging bill of the PDN connection to the charging system.

### Embodiment 3

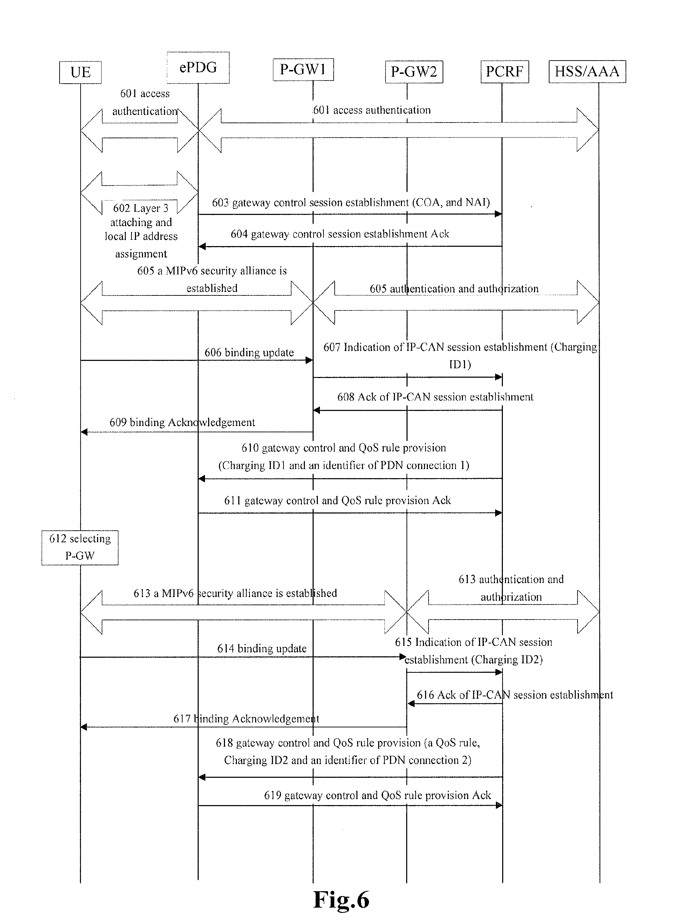

Fig. 6 is a flow of attaching, in which a UE accesses different service networks through different P-GWs through an untrusted non-3GPP IP network according to the embodiment of the present invention; and as shown in Fig. 6, the flow comprises the following Step 601 to Step 619.
Step 601: The UE initiates an Internet Key Exchange Version 2 (IKEv2) tunneling establishment process; and an HSS/AAA authorizes tunneling authentication for the UE.
Step 602: An ePDG transmits a last IKEv2 message to the UE, in which a CoA is allocated to the UE.
Step 603: The ePDG where a BBEPF resides transmits a "gateway control session establishment" request message to a PCRF, wherein the "gateway control session establishment" request message carries UE NAI and the CoA.
Step 604: The PCRF establishes a control policy, i.e., a QoS rule, based on network policies and subscription information of the UE, and transmits it to the ePDG by a "gateway control session establishment Ack" message. The control policy at this moment is irrelevant to services to be accessed by the UE.
Step 605: The UE performs a DNS query according to APN1, and acquires an IP address of P-GW1 which provides access service network 1; and a security alliance is established between the UE and the P-GW1, during which, the P-GW1 assigns Home of Address HoA1 for the UE.
Step 606: The UE transmits a "binding update" request message to the P-GW1, wherein the "binding update" request message carries the CoA and the HoA1.
Step 607: After receiving the "binding update" request message sent from the UE, the P-GW1 generates a charging identifier, Charging ID1, which is used to identify a charging bill related to PDN Connection 1 of APN1. PCEF1 residing in the P-GW1 transmits an "Indication of IP-CAN session establishment" message which carries the CoA, the HoA1, the NAI and the APN1 to the PCRF; and the PCRF associates the session with a gateway control session according to the CoA. The "Indication of IP-CAN session establishment" message also carries Charging ID1 so as to transmit it to the ePDG via the PCRF.
Step 608: After receiving the "Indication of IP-CAN session establishment" message, the PCRF establishes a corresponding PCC rule and an event trigger according to network policies, user subscription and information of service network 1 to be accessed, and transmits them to the P-GW1 by an "Ack of IP-CAN session establishment" message.
Step 609: After receiving the "Ack of IP-CAN session establishment" message, the P-GW1 returns a "binding Acknowledgement" message to the UE.
Step 610: The PCRF associates the gateway control session established in the Step 603 with the IP-CAN session established in the Step 607 according to the NAI and the CoA, modifies the previous QoS rule according to the network policies, the user subscription and the information of the service network 1 to be accessed, etc., establishes the event trigger, and transmits it to the BBERF in the ePDG by a "gateway control and QoS rule provision" message, wherein the "gateway control and QoS rule provision" message also carries the Charging ID1 and an identifier of PDN Connection 1.
Step 611: After receiving the "gateway control and QoS rule provision" message, the BBERF in the ePDG updates the QoS rule, etc. Meanwhile, the ePDG stores the Charging ID1 and associates the Charging ID 1 with a charging bill related to the PDN Connection 1 according to the identifier of the PDN Connection 1. The BBERF returns a "gateway control and QoS rule provision Ack" message to the PCRF.
Step: 612: When the UE decides to access service network 2, the UE performs a DNS query according to APN2 and acquires an IP address of P-GW2 which provides the access to service network 2.
Step 613: A security alliance is established between the UE and the P-GW2, during which the P-GW2 assigns a Home of Address, HoA2, for the UE.
Step 614: The UE transmits a "binding update" request message to the P-GW2, wherein the "binding update" request message carries the CoA and the HoA2.
Step 615: After receiving the "binding update" request message, the P-GW2 generates Charging ID2 for identifying a charging bill related to PDN Connection 2 of the APN2. PCEF2 residing in the P-GW2 transmits, to the PCRF, an "Indication of IP-CAN session establishment" message which carries the CoA, the HoA2, the NAI and the APN2, and the "Indication of IP-CAN session establishment" message also carries the Charging ID2.
Step 616: After receiving the "Indication of IP-CAN session establishment" message, the PCRF establishes a corresponding PCC rule and an event trigger according to the network policies, the user subscription and information of the service network 2 to be accessed, etc., and transmits them to the P-GW2 by an "Ack of IP-CAN session establishment" message.
Step 617: After receiving the "Ack of IP-CAN session establishment" message, the P-GW2 returns a "binding Acknowledgement" message to the UE.
Step 618: The PCRF associates the gateway control session established in the Step 603 with the IP-CAN session established in the Step 616 according to the CoA and the NAI. The PCRF establishes a QoS rule and an event trigger according to the network policies, the user subscription and the information of the service network 2 to be accessed, etc, and transmits them to the BBERF in the ePDG by a "gateway control and QoS rule provision" message. Meanwhile, the "gateway control and QoS rule provision" message carries the Charging ID2 and an identifier of PDN Connection 2.
Step 619; After receiving the "gateway control and QoS rule provision" message, the BBERF in the ePDG installs the QoS rule and the event trigger. Meanwhile, the ePDG stores the Charging ID2 which identifies a charging bill related to the PDN Connection 2 of the APN2. The BBERF returns a "gateway control and QoS rule provision Ack" message to the PCRF.

The flow of associating charging identifiers when the UE handover from a 3GPP access or a non-3GPP access to another untrusted non-3GPP access is similar to that when the UE accesses networks through the trusted non-3GPP IP access network, so it will not be repeated herein.

It should be noted that the embodiment of the present invention also apply to the scene in which the UE accesses different PDN networks through a same P-GW and charging identifiers are being associated.

In addition, the present invention can also be realized in the following ways: when the PCRF transmits a QoS rule to the trusted non-3GPP access gateway or the ePDG, the PCRF always transmits a charging identifier associated with the QoS rule. Therefore, the BBERF obtains the charging identifier associated with each QoS rule.

### Device Embodiments

### Embodiment 1

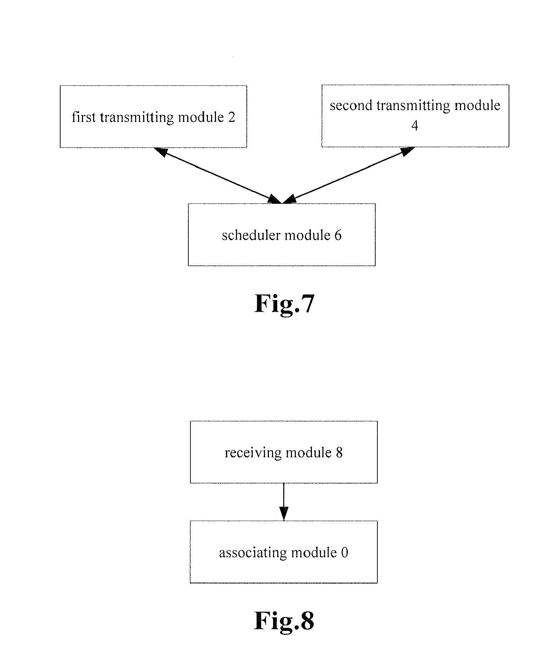

A PCRF is provided according to the embodiment of the present invention. Fig. 7 is a structure diagram of the PCRF according to the embodiment of the present invention. As shown in Fig. 7, the PCRF comprises: a first transmitting module 2, a second transmitting module 4, and a scheduler module 6; and the above structure will be described hereinafter.

The second transmitting module 4 is configured to transmit a charging identifier to a BBERF; the first transmitting module 2 is configured to transmit a PDN connection identifier associated with the charging identifier to the BBERF; and the scheduler module 6, which is connected to the first transmitting module 2 and the second transmitting module 4, is configured to schedule the second transmitting module 4 when the first transmitting module 2 transmits the PDN connection identifier.

Further, the PCRF also comprises: an acquiring module, configured to acquire the charging identifier. Specifically, the acquiring module can be realized by one of the following ways.
(1) When a PDN connection is established, the acquiring module acquires the charging identifier from a PDN network gateway.
(2) The acquiring module acquires the charging identifier from an IP-CAN session modification indication message received from the PDN network gateway.

By way of the embodiment, the PCRF, that can transmit a PND connection identifier associated with a charging identifier to the BBERF when transmitting the charging identifier to the BBERF, is provided.

### Embodiment 2

A BBERF is provided according to the embodiment of the present invention.

Fig.8 is a structure diagram of the BBERF according to the embodiment of the present invention; and as shown in Fig. 8, the BBERF comprises: a receiving module 8 and an associating module 0. The above structure will be described hereinafter.

The receiving module 8 is configured to receive a charging identifier and a PDN connection identifier associated with the charging identifier from a PCRF; and the associating module 0, which is connected to the receiving module 8, is configured to associate the charging identifier with a PDN connection according to the charging identifier and the PDN connection identifier received by the receiving module 8.

According to the embodiment, a BBERF that can associate a charging identifier with a PDN connection according to the received charging identifier and PDN connection identifier is provided.

In conclusion, by way of the above embodiment of the present invention, when the UE establishes IP access with multiple service networks and simultaneously uses the DSMIPv6 protocol, the trusted non-3GPP access gateway or the ePDG can correctly associate charging identifiers with PDN connectors via PDN connection identifiers carried by messages although the network has multiple PDN connections; therefore, the trusted non-3GPP access gateway or the ePDG can accurately identify the charging bills by using the charging identifiers.

Obviously, those skilled in the art shall understand that individual modules and individual steps of the present invention can be implemented with general computing devices, and they may be integrated in a single computing device or distributed in a network formed by a plurality of computing devices, and optionally, they may be implemented by using program codes executable by computing devices; thus they may be stored in memory devices for execution by the computing devices, or implemented by forming them into integrated circuit modules respectively, or by forming some means or steps to a single IC. Thus, the present invention is not limited to any particular combination of hardware and software.

Above description is only to illustrate the preferred embodiments but not to limit the present invention. It is apparent to those skilled in the art that various alterations and changes can be made to the present invention, and any modification, equivalent substitution and improvement may be within the scope of the present invention which is defined by the claims.

## Claims

1. A Policy and Charging Rule Function, PCRF, comprising:
a first transmitting module (2), configured to transmit a Quality of Service, QoS, rule to a Bearer Binding and Event Reporting Function, BBERF; and **characterized by**
a second transmitting module (4), configured to transmit a charging identifier associated with the QoS rule to the BBERF; and
a scheduler module (6), configured to schedule the second transmitting module when the first transmitting module transmits the QoS rule.

2. The PCRF according to Claim 1, further comprising an acquiring module configured to acquire the charging identifier.

3. A Bearer Binding and Event Reporting Function, BBERF, comprising:
a receiving module (8), configured to receive a Quality of Service, QoS, rule and **characterized by** the receiving module being further configured to receive a charging identifier associated with the QoS rule from a Policy and Charging Rule Function, PCRF; and by
an associating module (0), configured to associate the charging identifier with a Packet Data Network, PDN, connection according to the charging identifier and the QoS rule received by the receiving module.

4. A method for associating charging identifiers **characterized in that**
when a Policy and Charging Rule Function, PCRF, transmits a Quality of Service, QoS, rule to a Bearer Binding and Event Reporting Function, BBERF, the PCRF transmits a charging identifier associated with the QoS rule to the BBERF.

5. The method according to Claim 4, wherein, before the PCRF transmits the charging identifier to the BBERF, the method further comprises one of the following:
the PCRF acquiring the charging identifier from a Packet Data Network, PDN, gateway; and
the PCRF acquiring the charging identifier from an Indication of Internet Protocol Connectivity Access Network, IP-CAN, session establishment message or an Indication of IP-CAN session modification message received from the PDN gateway.

6. The method according to Claim 4 or 5, wherein the BBERF resides in:
a trusted non-3rd Generation Partnership Project access gateway, or an Evolved Packet Data Gateway.

## Patentansprüche

1. Policy and Charging Rule Function, PCRF, umfassend:
einem ersten Übertragungsmodul (2), das eingerichtet ist, eine Quality of Service, QoS, Regel zu einer Bearer Binding and Event Reporting Function, BBERF, zu übertragen; und **gekennzeichnet durch**
ein zweites Übertragungsmodul (4), das eingerichtet ist, einen Ladeidentifizierer, der mit der QoS Regel assoziiert ist, an die BBERF zu übertragen; und
ein Planungsmodul (6), das eingerichtet ist, das zweite Übertragungsmodul zu planen, wenn das erste Übertragungsmodul die QoS Regel überträgt.

2. PCRF nach Anspruch 1, die außerdem ein Erfassungsmodul umfasst, das eingerichtet ist, den Ladeidentifizierer zu erfassen.

3. Bearer Binding and Event Reporting Function, BBERF, umfassend:
einem Empfangsmodul (8), das eingerichtet ist, eine Quality of Service, QoS, Regel zu empfangen, und **gekennzeichnet ist durch** das Empfangsmodul, das außerdem eingerichtet ist, einen Ladeidentifizierer, der mit der QoS Regel assoziiert ist, von einer Policy and Charging Rule Function, PCRF, zu empfangen; und **durch**
ein Assoziationsmodul (0), das eingerichtet ist, den Ladeidentifizierer mit einer Packet Data Network, PDN, Verbindung gemäß dem Ladeidentifizierer und der QoS Regel, die von dem Empfangsmodul empfangen wird, zu assoziieren.

4. Verfahren zum Assoziieren vom Ladeidentifizierern, **dadurch gekennzeichnet, dass**,
wenn eine Policy and Charging Rule Function, PCRF, eine Quality of Service, QoS, Regel an eine Bearer Binding and Event Reporting Function, BBERF, überträgt, die PCRF einen Ladeidentifizierer, der mit der QoS Regel assoziiert ist, an die BBERF überträgt.

5. Verfahren nach Anspruch 4, wobei, bevor die PCRF den Ladeidentifizierer an die BBERF überträgt, das Verfahren außerdem eines des folgenden aufweist:
die PCRF erfasst den Ladeidentifizierer von einem Packet Data Network, PDN, Gateway; und
die PCRF erfasst den Ladeidentifizierer aus einer Angabe einer Internet Connectivity Access Network, IP-CAN, Sitzungsherstellungsnachricht oder einer Angabe einer IP-CAN Sitzungsänderungsnachricht, die von dem PDN Gateway empfangen wird.

6. Verfahren nach Anspruch 4 oder 5, wobei die BBERF untergebracht ist in:
einem gesicherten Non-3rd Generation Partnership Project Zugangsgateway oder einem Evolved Packet Data Gateway.

## Revendications

1. Fonction de règles de tarification et de politiques PCRF, comprenant :
un premier module de transmission (2) configuré pour transmettre une règle de qualité de service QoS à une fonction de rapport d'événements et de liaison de porteuses BBERF ; et **caractérisée par**
un second module de transmission (4) configuré pour transmettre un identifiant de tarification associé à la règle QoS à la BERF ; et
un module de programmation (6) configuré pour programmer le second module de transmission lorsque le premier module de transmission transmet la règle QoS.

2. PCRF selon la revendication 1, comprenant en outre un module d'acquisition configuré pour acquérir l'identifiant de tarification.

3. Fonction de rapport d'événements et de liaison de porteuses BBERF, comprenant :
un module récepteur (8) configuré pour recevoir une règle de qualité de service QoS et **caractérisée par** le module récepteur qui est en outre configuré pour recevoir un identifiant de tarification associé à la règle QoS provenant d'une fonction de règles de tarification et de politiques PCRF ; et par :
un module d'association (0) configuré pour associer l'identifiant de tarification à une connexion de réseau de données en paquets PDN selon l'identifiant de tarification et la règle QoS reçue par le module récepteur.

4. Procédé d'association d'identifiants de tarification **caractérisé en ce que** :
lorsqu'une fonction de règles de tarification et de politiques PCRF transmet une règle de qualité de service QoS à une fonction de rapport d'événements et de liaison de porteuses BBERF, le PCRF transmet un identifiant de tarification associé à la règle QoS à la BBERF.

5. Procédé selon la revendication 4, dans lequel, avant que le PCRF ne transmette l'identifiant de tarification à la BBERF, le procédé comprend l'une des situations suivantes :
le PCRF acquiert l'identifiant de tarification d'une passerelle du réseau de données en paquets PDN ; et
le PCRF acquiert l'identifiant de tarification d'une indication d'un message d'établissement de session d'un réseau d'accès de connectivité au protocole internet IP-CAN ou d'une indication d'un message de modification de session de l'IP-CAN reçu de la passerelle PDN.

6. Procédé selon la revendication 4 ou la revendication 5, dans lequel la BBERF réside dans :
une passerelle d'accès à un projet de partenariat approuvé non de troisième génération ou une passerelle de données en paquets évoluée.
